(19) Europäisches Patentamt

European Patent Office

Office européen des brevets

(11) EP 2 538 177 A2

(12) EUROPEAN PATENT APPLICATION

(43) Date of publication:
26.12.2012 Bulletin 2012/52

(51) Int Cl.:
G01D 5/22 (2006.01)

(21) Application number: 12250115.8

(22) Date of filing: 24.05.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 24.06.2011 GB 201110792

(71) Applicant: Penny & Giles Controls Ltd. (GB)
Christchurch
Dorset BH23 3TJ (GB)

(72) Inventor: Harris, Ian
Poole, Dorset BH12 4PR (GB)

(74) Representative: Somervell, Thomas Richard
Marks & Clerk LLP
Alpha Tower
Suffolk Street
Queensway
Birmingham
B1 1TT (GB)

(54) **Inductive sensor with datum adjustment**

(57)    An inductive position sensor comprises a moveable core member, a first sensor winding and a second sensor winding. An inductive coupling between the first and second sensor windings provides a sensor output indicative of the position of the core member. The sensor includes an adjuster for setting a datum position of the core member. The adjuster comprises first and second adjuster windings and an adjustment member, which is moveable to vary the inductive coupling between the first and second adjuster windings so as to provide an adjuster output that off-sets the sensor output when the core member is in the datum position.

Figure 2.

## Description

The present invention relates to inductive sensors. More particularly, the invention relates to sensors that detect position or movement by means of electromagnetic induction.

Inductive sensors are used widely, for example, in the control or measurement of position in systems such as fuel flow measurement, servo valves or hydraulic actuators. Examples of inductive sensors include linear variable differential transducers (LVDTs), linear variable inductive transducers (LVITs), variable resistive vector sensors and eddy-current sensors. These sensors make use of inductive coupling to accurately detect the position and/or movement of a component. For example, on aircraft, hydraulic systems are used for actuating wing flaps and thrust reversers. In these sensors, a moveable member is coupled to the component and its movement relative to a fixed member or body results in a change in inductive coupling in an inductor winding, which is detected by a change in an electrical parameter (e.g. voltage, current or one or more impedance vectors) of the inductor. In an inductive sensor such as an LVDT a signal (e.g. ac voltage) is supplied to a primary inductor winding, and the position of the moveable member determines the voltage induced in a secondary winding.

In certain applications, such as in aircraft control systems, the sensor is required to monitor the position of a component with a high degree of accuracy. However, the components themselves and those to which they are mounted, are constructed to combined tolerances that may be well in excess of the required accuracy of the sensor/ system. This means that when the sensor is fitted, its position must be carefully adjusted (for example by inserting shims into a flange mounting) so that a zero, or datum position corresponds to a zero or predetermined output signal from the sensor. This adjustment can be a time-consuming operation. Moreover, where the sensor is being used on a pressurised hydraulic or fuel system, the system must often be depressurised before any adjustment can be made to the sensor position.

These problems have been addressed by the applicant in WO 2008/125853, which describes an inductive sensor having a means for setting a datum by moving an adjustable component so as to vary the inductive coupling between the primary and secondary windings while the sensor is in a datum position. This ability to set the datum position after the sensor has been mounted can be done relatively quickly and removes the need for any physical adjustment of the sensor mounting and perhaps any associated depressurisation. The approach is satisfactory for many applications where it is important to ensure that the datum position is set accurately. However, a problem arises in that the electrical response characteristics of the device (e.g. the gain, sum voltage) is affected by the adjustable component. In other words, although the zero or datum position is set accurately, the response (induced voltage as a function of distance moved by the moveable core member, also known as gain) changes when the adjustable component is moved. This means that these sensors are not sufficiently accurate for certain applications.

Many of these inductive sensors provide a ratiometric output. That is the output signal is in the form of a ratio of the output voltage across one or more of the sensor coils to an applied, or sum voltage (e.g. V1/Vinput, V2/Vinput, (V1-V2)/Vinput, (V1+V2)/(V1+V2) etc). Ratiometric outputs are advantageous in that they are less sensitive to fluctuations in the input voltage supplied to the sensor. However, for repeatable accuracy, ratiometric outputs require both the measured output voltage and the sum voltage to be unaffected by the datum adjustment.

Also, with these known adjustable datum sensors, the adjustable component has to be axially aligned with the sensor and in close proximity to the primary and secondary windings. This can give rise to problems when adjusting the datum setting if the sensor is located in a remote or inaccessible position.

The present invention has been conceived with the foregoing in mind.

According to the present invention there is provided an inductive position sensor comprising a moveable core member, a first sensor winding and a second sensor winding. An inductive coupling between the first and second sensor windings provides a sensor output indicative of the position of the core member. The sensor includes an adjuster for setting a datum position of the core member. The adjuster comprises first and second adjuster windings and an adjustment member, which is moveable to vary the inductive coupling between the first and second adjuster windings so as to provide an adjuster output that off-sets the sensor output when the core member is in the datum position.

The sensor may be constructed so that the sensor windings are isolated from, or minimally affected by, magnetic fields generated by the adjuster windings.

It is an advantage that the adjuster can be used to set a datum position of the sensor without the need to make any mechanical adjustment to the sensor's mounting, while at the same time the sensor's gain (proportionality between the extent of movement and the sensor output signal) is not affected.

The adjuster may be arranged as a linear variable differential transformer, LVDT, wherein the first adjuster winding is a primary adjuster coil and the second adjuster winding is a secondary adjuster coil. The adjuster may comprise a pair of secondary adjuster coils, the adjustment member having a discrete length core of magnetically permeable material whereby movement of the adjustment member increases the voltage induced in one of the pair of secondary adjuster coils and reduces the voltage induced in the other of the pair secondary adjuster coils.

Alternatively, the adjuster may be arranged as a linear variable inductive transformer, LVIT, providing a ratiometric output of voltages across the first and second adjuster windings, wherein movement of the adjustment member varies the inductive coupling to adjust the impedances of the first and second adjuster coils.

It is an advantage that the adjuster can be used to maintain a constant impedance value for the transducer. This is important where repeatable accuracy is required in the ratiometric response characteristics of the transducer.

The sensor may be a linear variable differential transformer, LVDT, the first sensor winding being a primary sensor coil and the second sensor winding being a secondary sensor coil. The sensor may comprise a pair of secondary sensor coils, the core member having a discrete length core of magnetically permeable material whereby movement of the core member increases the voltage induced in one of the pair of secondary sensor coils and reduces the voltage induced in the other of the pair secondary sensor coils.

Alternatively, the sensor may be arranged as a linear variable inductive transformer, LVIT, providing a ratiometric output of voltages across the first and second sensor windings, wherein movement of the core member varies the inductive coupling to adjust the impedances of the first and second sensor coils.

In embodiments, the adjuster and the inductive position sensor may be integrated into the same transducer body. In some embodiments, the adjuster and the inductive position sensor are mounted around a common axial tube. The sensor may detect the position of an axially moveable core member along a first portion of the common axial tube, and the adjuster core may be moveable along a second portion of the common axial tube. In some embodiments, the common axial tube has a transverse wall separating the first and second portions. It is an advantage that, in such embodiments, the sensor may be used to detect movement of a member in a pressurised fluid, while the adjuster is free to move in a passage that is not subjected to the fluid pressure. In some embodiments, the adjuster core may be threaded to engage a corresponding thread in the axial tube.

The adjuster may be magnetically shielded from the inductive position sensor. Alternatively, the adjuster and the inductive position sensor may be mounted in separate housings.

Embodiments of the invention will now be described with reference to the accompanying drawings in which:

Figure 1 is a cross-sectional view of a known LVDT;
Figure 2 is a cross-sectional view of an LVDT including a null adjuster arrangement;
Figure 3 is a diagram illustrating the electrical wiring connections for the LVDT of Figure 2;
Figure 4 is a diagram showing an alternative illustration of the electrical wiring connections for the LVDT of Figure 2.
Figure 5 is a graph showing the effect of adjustment on the output signal of a sensor of the type shown in Figure 2.
Figure 6 is a graph showing typical results of measured errors in a LVDT of the type shown in Figure 2.
Figure 7 is a diagram illustrating the electrical wiring connections for a known LVIT.
Figure 8 is a graph showing a typical output signal response for the LVIT of Figure 6.
Figure 9 is a diagram illustrating the electrical wiring connections for a LVIT including a null adjuster arrangement.

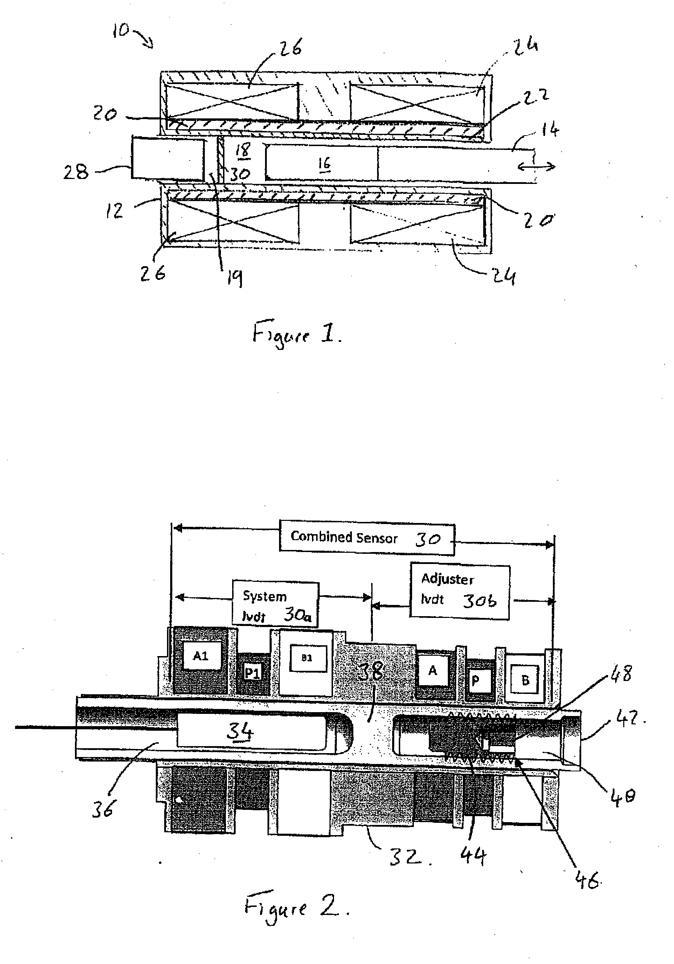

Referring to Figure 1, a known LVDT 10 is shown, a detailed description of which appears in WO 2008/125853. LVDT 10 has a body 12 and a moveable member 14. The moveable member 14 carries a core 16 of a magnetically permeable material. The member and core are moveable longitudinally within an axial passage 18 formed in the body 12. The body 12 carries a primary winding 20 around an axial passage 18. A first secondary winding 24 is wound around a first portion of the length of the body 12 and a second secondary winding 26 is wound around a second portion of the length of the body 12. In accordance with the principles of operation of an LVDT, when an ac current is supplied to the primary winding 20, this generates a magnetic field, which induces a current to flow in the secondary windings 24, 26. The size of the current or voltages induced in each of the secondary windings 24, 26 varies in accordance with the amount of magnetic coupling, which depends on the position of the core 16. Measurements of the induced currents, or the voltages across each of the secondary windings 24, 26 can be used to provide a measurement of the position of the core 16 and moveable member 14.

When the moveable member 14 positions the core 16 in a central position, such as that shown in Figure 1, the currents/voltages induced in each of the secondary windings will be similar. These may be combined, using suitable connection circuitry (or electronically as Va-Vb, Va+Vb etc.), to cancel each other and thereby provide a zero current (or voltage) output that corresponds to this position. However, the LVDT is required to be mounted such that the body 12 is fixedly attached to one component (e.g. a hydraulic cylinder), while the moveable member 14 is attached to another component (e.g. a piston). Such mechanical components are manufactured to within certain tolerances, and these tolerances mean that, when the LVDT is mounted, it cannot be guaranteed that the zero output position exactly corresponds to the zero, or datum position of the component. Accordingly, when such systems are being assembled it had previously been necessary for some physical adjustment to be made to the mounting of the LVDT, which could be a difficult and time consuming operation. To overcome these difficulties, as described in WO 2008/125853 and shown in Figure 1, an adjustable component is provided in the form of an adjustment piece 28 of magnetically permeable material. The adjustment piece 28 is axially moveable such that more or less of the magnetically permeable material is within an end portion 19 of the axial passage 18. In this way the amount of magnetic coupling between the primary winding 20 and the second secondary winding 26 can be adjusted by moving the adjustment piece 28 further into or out of the passage portion 19.

The above-described LVDT 10 overcomes the datum-position setting problem in a manner that is suitable for many applications. However, the position of the adjustment piece 28 also affects the electrical response characteristics of the device such that the measured output current or voltage for a particular amount of displacement of the moveable member 14 and core 16 is affected.

In other words there is a change in the gain of the device caused by the change in the amount of magnetic coupling when the adjustment piece 28 is moved. This means that, although the zero or datum position can be set accurately, the response (induced voltage as a function of distance moved by the moveable core member) changes. However there are applications, such as the control of movement over very short stroke distances, where it is required to detect the distance moved accurately and repeatably.

Figure 2 illustrates an LVDT 30 similar to the LVDT 10 described above. LVDT 30 has a body 32 and a sensor core member 34 that is moveable, for example when coupled to a moveable component (not shown). The sensor core member 34 is moveable longitudinally within an axial passage 36 formed in the body 32. The body 32 carries a primary winding P1 around the axial passage 36. A first secondary winding A1 is wound around a first portion of the length of the body 32 and a second secondary winding B1 is wound around a second portion of the length of the body 32. In the embodiment shown in Figure 2, the axial passage 36 extends only as far as a transverse wall 38 just beyond the end of the portions of the body 32 around which the primary winding P1, first secondary winding A1 and second secondary winding B1 are wound. The LVDT 30 up to the transverse wall 38 operates as a position sensing system LVDT 30a, in accordance with the principles of operation of an LVDT as described above.

In addition, as shown in Figure 2, the LVDT 30 includes an adjuster LVDT 30b. The body 32 extends beyond the transverse wall 38 to form a further axial passage 40 with an end opening 42. The adjuster LVDT includes an adjuster primary winding P and adjuster secondary windings A and B wound around the further axial passage 40. An adjuster core member 44 is mounted so as to be axially moveable along the further axial passage 40. In the embodiment shown in Figure 2, the adjuster core member 44 carries a male thread 46 that engages a female thread (not shown) in the bore of the further axial passage 40. The adjuster core member 40 also has a hexagonal socket head 48 that can receive a hexagonal head tool for screwing the core member 44 along the further axial passage 40. When the datum position has been set, a locking arrangement may be provided. For example a second, locking nut, formed of a non-magnetically permeable material may be screwed in to lock the core member 40 in position. In an alternative arrangement (not shown) the adjuster core member 40 may extend axially along the axial passage 40 through the opening 42, and the locking arrangement may be disposed outside the end of the sensor body 32. This is particularly suitable for an arrangement where it is required that the sensor and adjuster coils are in a hermetically sealed environment. It will be appreciated that other means for engaging and locking the adjuster core member in the further axial passage 40, or other methods of moving the adjuster core member 44 could be employed.

The presence of the transverse wall 38 means that the LVDT 30 may be used to detect movement of a component in a pressurised fluid (for example movement of a piston in a hydraulic cylinder), while the further axial passage 40 is un-pressurised to permit adjustments to be made. However, it will be appreciated that the transverse wall 38 may be omitted for applications that do not involve any pressurisation or other reason for physical separation.

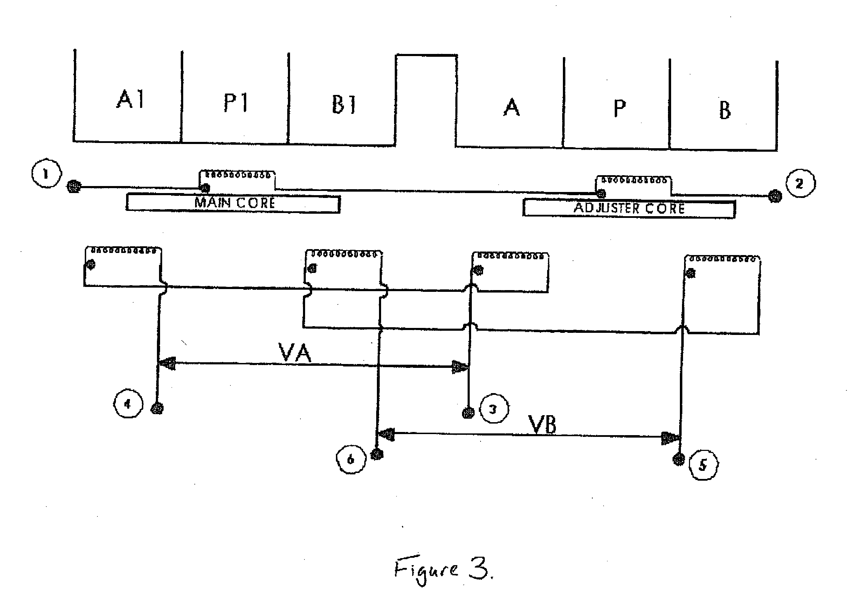

Figure 3 is a diagram illustrating the electrical wiring connections made to each of the primary and secondary windings P1, A1, B1, P, A, B for one arrangement of the LVDT 30 of Figure 2. As shown, the primary windings P1 and P are connected in series between input voltage terminals 1 and 2. The first secondary windings A1 and A of the system LVDT 30a and the adjuster LVDT 30b respectively are connected in series between output terminals 3 and 4. Note that in Figure 3 a large dot has been placed at one end of each of the windings P1, A1, B1, P, A, B to indicate the start (or finish) of the winding "sense" - i.e. the direction in which the windings are wound around the axial passages 36, 40. Depending on the sense direction of the windings, adjustment may result in either adding to or subtracting from the induced voltage. The voltage across terminals 3 and 4 is designated VA, and is the sum of the voltages induced in windings A1 and A. The second secondary windings B1 and B of the system LVDT 30a and the adjuster LVDT 30b respectively are connected in series between output terminals 5 and 6. The voltage across terminals 5 and 6 is designated VB, and is the sum of the voltages induced in secondary winding B1 and B.

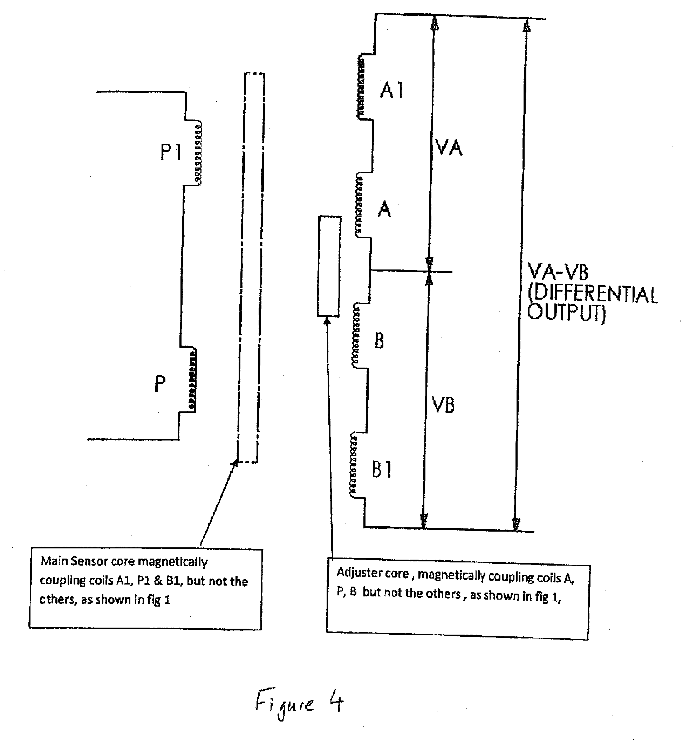

The induced voltages VA and VB may be used in various ways to provide a transducer output signal. For example, in one arrangement, terminals 3 and 5 are connected together as a centre tap. This is illustrated in Figure 4, which is essentially an alternative view of the wiring arrangement as shown in Figure 3 but shows the electrical wiring more clearly (at the expense of a loss of physical topography of the windings P, P1, A, A1, B, B1 and the sensor and adjuster core members). In this arrangement, the phases of the windings can be arranged such that series opposition occurs. An output signal taken across terminals 4 and 6 is then proportional to VA-VB. It is also possible to provide a ratiometric output signal proportional to (VA-VB)/(VA+VB).

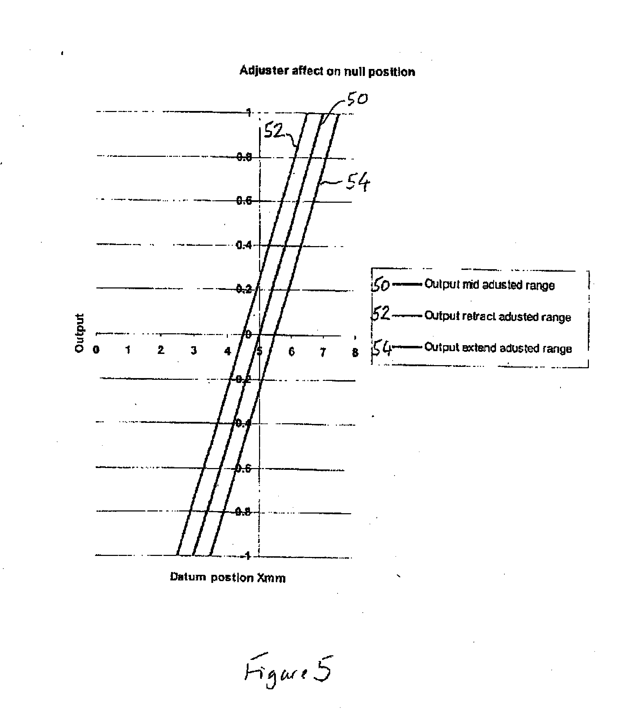

In this arrangement, the "null" position of the sensor, where the voltages VA and VB cancel each other, occurs at a position of the sensor core member 34 that is determined by the ratio of the numbers of turns of the winding A1, A, B1, B. However, the null position can be adjusted by movement of the adjuster core member 44. Figure 5 is a graph showing the effect that movement of the adjuster core member 44 has on the output signal. Movement of the adjuster core member 44 in or out of the axial passage 40 causes the null position to move within a range as illustrated by the three lines 50, 52, 54 of the graph. Line 50 shows the response with the adjuster core member 44 in the middle of the adjustment range, while line 52 shows the response with the adjuster core member in a retracted position and line 54 shows the response with the adjuster core member 44 extended into the axial passage 40. Note that the three lines 50, 52, 54 are substantially parallel, indicating that the gain of the sensor is not affected by the adjustment, nor is the linearity of the response. In the embodiment shown in Figure 2 the core 44 is a discrete length and always within the axial passage 40 so that at least some of the core 44 is within the axial boundaries of the coils A and B of the adjuster LVDT 30b. This is advantageous because it gives rise to a low error LVDT 30b by ensuring that movement away from its own central null position causes the voltages induced in A to increase and B to decrease or vice versa. This low error then adds to (i.e. off-sets) the error in the sensor LVDT 30a when the two LVDTs 30a and 30b are combined.

It should be noted that the arrangement shown in Figures 3 and 4 is but one example. Other arrangements are possible, in which the primary windings P1, P may be connected in series, or in parallel or in other phase combinations. Similarly, the secondary windings A1, B1, A, B can be connected in various combinations, depending on the output requirements.

It should also be noted that in the embodiment of Figure 2 the system LVDT 30a and the adjuster LVDT 30b are mounted in a common body 32 to provide the combined sensor 30 as a single unit. In such constructions the adjuster LVDT 30b may be magnetically shielded from the system LVDT 30a to prevent or minimise any magnetic coupling between the sensor and adjuster components. However, because when adjustment is made to the adjuster LVDT 30b, the effect of the adjustment is combined electrically with the system LVDT output, then it is also possible for the adjuster LVDT 30b to be physically separate from the system LVDT 30a. This means that, where the system LVDT is located in a remote and/or inaccessible location, the adjuster LVDT can be mounted in a location that can more easily be accessed to make any required adjustments.

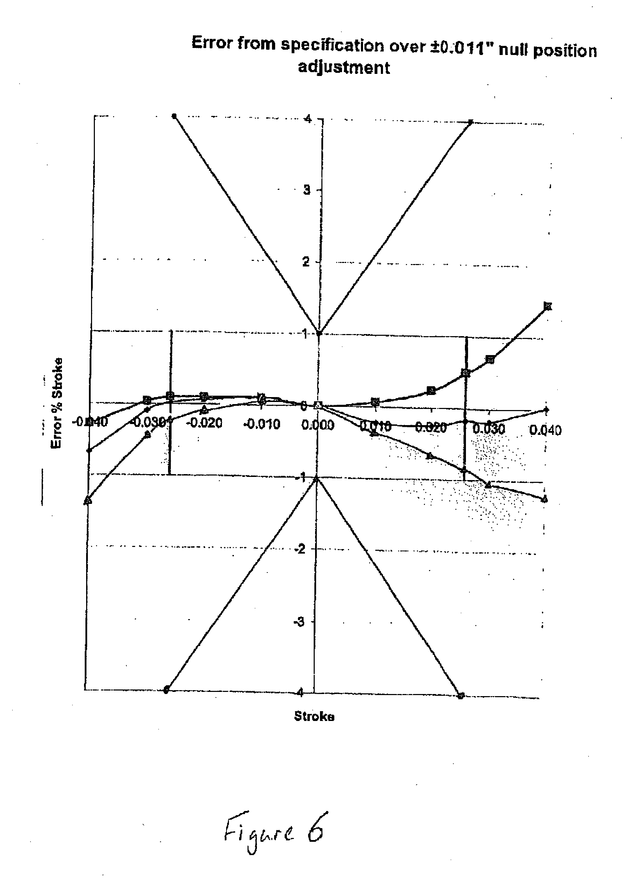

Figure 6 is a graph showing measurements made on an LVDT of the type shown in Figure 2, having a stoke length of 1.27mm (0.05 inches). The graph shows the errors in the measured sensor output signals expressed as a percentage of the LVDT stroke (y-axis) as a function of the stroke position (x-axis). Lines 1a and 1b are a typical maximum error specification for an LVDT application. For each of the measurements (lines 2 - 4), the LVDT was set up using a 5-wire arrangement as shown in Figure 4. Line 2 (diamond markers) shows errors for an initial case in which the LVDT was mounted with the system sensor core 34 (see Figure 2) at a first (zero) position and the adjuster moved until VA=VB to set the null position. Line 3 (square markers) shows the errors for a second case in which the system sensor core was moved inwards from the zero position by 0.28mm (0.011 inches). The adjuster core was moved inwards until VA=VB, requiring a movement of 0.875mm, to set the null position. Line 4 (triangular markers) shows the errors for a third case in which the system sensor core was moved outwards from the zero position by 0.28mm (0.011 inches). The adjuster core was moved outwards until VA=VB, requiring a movement of 0.7875mm to set the null position. Note that in each case the error lines are shown as a function of the stroke from the reset null position (i.e. stroke of 0.000 corresponds to the null position for each case, which is the initial zero position only for line 2).

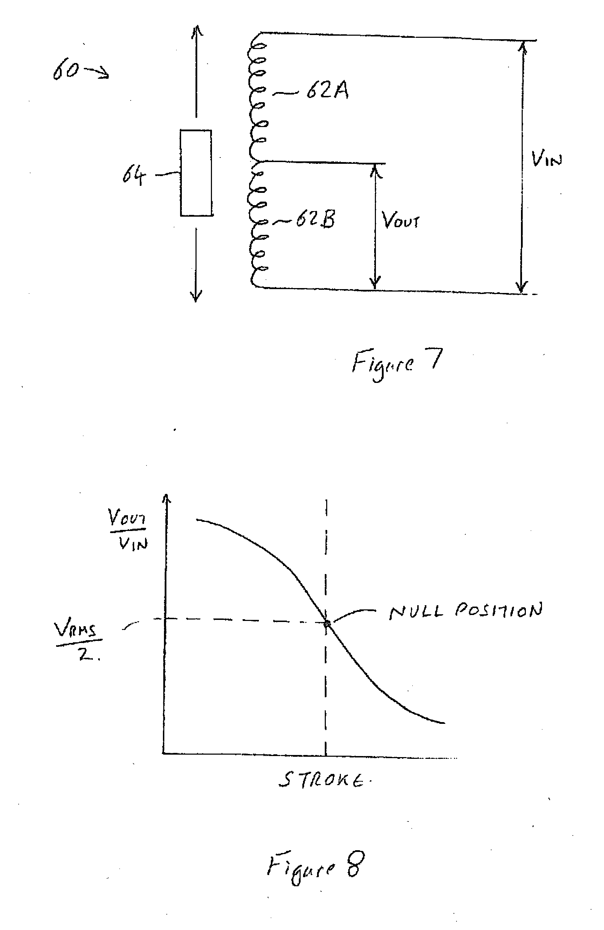

Figure 7 illustrates the principles of a known linear variable inductive transducer (LVIT) 60 without an adjuster. An input voltage, Vin is provided across a pair of inductor windings 62A, 62B. A moveable core member 64 affects the amount of inductive coupling between the windings 62A, 62B. An output voltage signal, Vout is taken across one of the windings, in this case 62B.

Figure 8 shows a how the ratiometric output signal Vout/Vin varies with the stroke of the LVIT of Figure 7 (position of moveable core 64). If the number of turns of each of the windings 62A, 62B is the same, the windings are said to be balanced, and a central, or null position of the core 64 occurs when Vout/Vin is Vrms/2 (one half of the root mean square input voltage). However, in this case, unlike an LVDT, there is a real voltage at the null position. Note that the null position and voltage will be different if the windings 62A, 62B have unbalanced numbers of turns. In operation, moving the core 64 increases the impedance of one of the windings 62A, 62B, while decreasing the impedance of the other. Thus the output signal is given by:

$$\left(\frac{Z_B}{Z_A + Z_B}\right) \cdot V_{in}$$

where $Z_A$ is the impedance of winding 62A and $Z_B$ is the impedance of winding 62B.

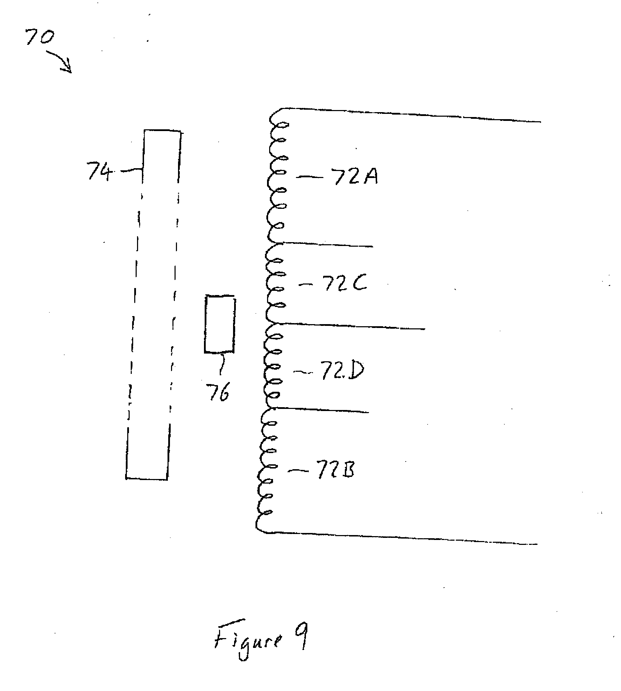

Figure 9 illustrates a wiring arrangement of one embodiment of an LVIT 70 with an adjuster. Here, in addition to LVIT system sensor windings 72A, 72B, there are two adjuster windings 72C, 72D. The LVIT 70 has a system sensor core 74 as well as a separate adjuster core 76. Movement of the system sensor core 74 alters the impedances of the sensor windings 72A, 72B as described above. However, when the sensor is mounted in the null position, the total impedance of the windings 72A, 72B, 72C, 72D across which Vin is applied can be maintained at a constant value by adjusting the adjuster core 76 to vary the impedances of the adjuster windings 72C, 72D.

As with the LVDTs described above, the LVIT 70 may be constructed with the both the system sensor windings 72A, 72B and the adjuster windings 72C, 72D in-line in a single sensor unit. In such constructions the adjuster windings may be magnetically shielded from the sensor windings to prevent or minimise any magnetic coupling between the sensor and adjuster components. As with the LVDT 30 shown in Figure 2, when detecting movement of a component in a pressurised fluid the LVIT 70 may be constructed with a transverse wall between axial passages in which the sensor and adjuster cores are located. Alternatively, the adjuster windings 72C, 72D and adjuster core 76 may be physically separated from the system sensor. Also, the numbers of turns of the system sensor windings 72A, 72B or of the adjuster windings 72C, 72D may be balanced or unbalanced.

**Claims**

1. An inductive position sensor comprising a moveable core member, a first sensor winding and a second sensor winding, wherein an inductive coupling between the first and second sensor windings provides a sensor output indicative of the position of the core member,
the sensor including an adjuster for setting a datum position of the core member, the adjuster comprising first and second adjuster windings and an adjustment member, which is moveable to vary the inductive coupling between the first and second adjuster windings so as to provide an adjuster output that offsets the sensor output when the core member is in the datum position.

2. The inductive sensor of claim 1, wherein the sensor is constructed so that the sensor windings are isolated from, or minimally affected by, magnetic fields generated by the adjuster windings.

3. The inductive sensor of claim 1 or claim 2, wherein the adjuster is arranged as a linear variable differential transformer, LVDT, wherein the first adjuster winding is a primary adjuster coil and the second adjuster winding is a secondary adjuster coil.

4. The inductive sensor of claim 3, wherein the adjuster comprises a pair of secondary adjuster coils and the adjustment member has a discrete length core of magnetically permeable material whereby movement of the adjustment member increases the voltage induced in one of the pair of secondary adjuster coils and reduces the voltage induced in the other of the pair secondary adjuster coils.

5. The inductive sensor of claim 1 or claim 2, wherein the adjuster is arranged as a linear variable inductive transformer, LVIT, providing a ratiometric output of voltages across the first and second adjuster windings, wherein movement of the adjustment member varies the inductive coupling to adjust the impedances of the first and second adjuster coils.

6. The inductive sensor of any preceding claim, wherein the sensor is a linear variable differential transformer, LVDT, the first sensor winding being a primary sensor coil and the second sensor winding being a secondary sensor coil.

7. The inductive sensor of claim 6, wherein the sensor comprises a pair of secondary sensor coils and the core member has a discrete length core of magnetically permeable material whereby movement of the core member increases the voltage induced in one of the pair of secondary sensor coils and reduces the voltage induced in the other of the pair secondary sensor coils.

8. The inductive sensor of any of claims 1 to 5, wherein the sensor is arranged as a linear variable inductive transformer, LVIT, providing a ratiometric output of voltages across the first and second sensor windings, wherein movement of the core member varies the inductive coupling to adjust the impedances of the first and second sensor coils.

9. The inductive sensor of any preceding claim, wherein the adjuster member has a discrete length core and is moveable along an axis such that, at any position of the core at least some of the core is within axial boundaries of the adjuster windings.

10. The inductive position sensor of claim 9, wherein the adjuster is integrated into a common transducer body of the inductive position sensor.

11. The inductive position sensor of claim 10 wherein the adjuster windings and the inductive position sensor windings are mounted around a common axial tube.

12. The inductive position sensor of claim 11 wherein the inductive position sensor detects the position of the axially moveable core member along a first portion of the common axial tube, and the adjuster core is moveable along a second portion of the common axial tube.

**13.** The inductive position sensor of claim 12 wherein the common axial tube has a transverse wall separating the first and second portions.

**14.** The inductive position sensor of any of claims 11 to 13 wherein the adjuster core is threaded and engages a corresponding thread in the axial tube.

**15.** The inductive position sensor of any of claims 10 to 14, wherein the adjuster is magnetically shielded from the inductive position sensor.

**16.** The inductive position sensor of any of claims 1 to 9, wherein the adjuster and the inductive position sensor are mounted in separate housings.

Figure 1.

Figure 2.

Figure 3.

P1

P

A1

VA

A

B

VB

B1

VA-VB
(DIFFERENTIAL
OUTPUT)

Main Sensor core magnetically
coupling coils A1, P1 & B1, but not the
others, as shown in fig 1

Adjuster core, magnetically coupling coils A,
P, B but not the others, as shown in fig 1,

Figure 4

**Adjuster affect on null position**

Figure 5

**Error from specification over ±0.011" null position adjustment**

Figure 6

EP 2 538 177 A2

Figure 7

Figure 8

13

70

74

72A

72C

72D

76

72B

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008125853 A